# EUROPEAN PATENT SPECIFICATION

(11) **EP 3 624 210 B1**
(45) Date of publication and mention of the grant of the patent: **23.03.2022**
(21) Application number: 18193758.2
(22) Date of filing: 11.09.2018
(51) Int. Cl.: H01M 50/249

(54) **FLEXIBLE MOUNTED BATTERY PACK FOR A TRANSPORTATION VEHICLE**
FLEXIBLES MONTIERTES BATTERIEPACK FÜR EIN TRANSPORTFAHRZEUG
BLOC BATTERIE MONTÉ FLEXIBLE DESTINÉ À UN VÉHICULE DE TRANSPORT

(43) Date of publication of application: 18.03.2020
(73) Proprietor: ABB Schweiz AG, 5400 Baden (CH)
(72) Inventor: SCHUME, Matthias, 79787 Lauchringen (DE); TRAUB, Felix, 5413 Birmenstorf (CH); GILGEN, Alexander, 5443 Niederrohrdorf (CH); FRANCÉS, Yolanda, 5107 Schinznach-Dorf (CH); JANSSSEN, Oliver, 5312 Döttingen (CH)
(74) Representative: Qip Patentanwälte Dr. Kuehn & Partner mbB

(56) References cited:
- EP-A1- 2 332 761
- EP-A1- 3 070 763
- US-A1- 2017 305 248

## Description

### FIELD OF THE INVENTION

The invention relates to a battery pack for a transportation vehicle and to a transportation vehicle.

### BACKGROUND OF THE INVENTION

Many transportation vehicles, such as trains, trams and buses have an electrical drive, which is supplied with electrical energy from an electrical grid. To bridge sections of the route of a transportation vehicle, where no access to the electrical grid is available, a battery storage system may be installed in the transportation vehicle.

Such a battery storage system usually comprises one or more battery packs and further equipment, such as controllers, connectors, disconnectors, fuses, sensors, etc. A battery pack is usually composed of several battery modules, each of which comprises an assembly of battery cells. Usually, the battery modules are screwed to a bottom plate of the battery pack.

Batteries in transportation applications, such as railways or buses, are subjected to high mechanical stresses in the form of vibrations and shocks. The battery storage system may have to be able to withstand mechanical stresses.

Due to the high energy and power demands of transportation vehicles, the physical size of the battery storage system may have to be very large.

EP 3 070 763 A1 relates to a battery pack for an electric vehicle. A battery module may be connected via flanges to a support part.

US 2017/305 248 A1 relates to a battery mounting structure, in which several battery packs can be mounted in a common housing to the bottom side of an electric vehicle.

EP 2 332 761 A1 relates to a battery case, which may be mounted via flanges on a side wall to the bottom side of a car.

### DESCRIPTION OF THE INVENTION

It is an objective of the invention to provide a lightweight battery pack for a transportation vehicle, which withstands vibrations and shocks generated in a transportation vehicle. It is a further objective of the invention to minimize the transfer of mechanical stress from the pack into battery modules of the battery pack.

These objectives are achieved by the subject-matter of the independent claims. Further exemplary embodiments are evident from the dependent claims and the following description.

A first aspect of the invention relates to a battery pack for a transportation vehicle, such as a railway vehicle, a train, a tram and a bus. The transportation vehicle may be suppliable by an electrical grid and/or by a battery storage system.

A battery storage system may comprise one or more battery packs and further electric equipment for charging, discharging and/or controlling the batteries of the battery pack. The battery storage system may be designed for high-power applications, such as transportation and/or power quality. Here, high power may refer to currents of more than 100 A and/or voltages of more than 100 V.

According to an embodiment of the invention, the battery pack comprises a plurality of battery modules, each battery module having a housing, in which at least one battery cell is accommodated and a frame for mechanically supporting the battery modules. A battery cell may comprise elements and/or chemicals for storing electrical energy. The housing of a battery module may accommodate one or more of these cells and/or may provide electrical connections to these battery cells. For example, the housing may be assembled of one or more parts made of metal, such as aluminium, and/or plastics.

A housing of a battery module may be hermetically sealed, such that the materials and/or chemicals of the battery cells are sealed from the environment.

According to an embodiment of the invention, the housings of the battery modules comprise flanges, which are connected to the frame.

The frame may be part of a support structure for the battery pack. With the frame, which may be composed of struts, plates, etc., the battery pack may be mounted to the transportation vehicle. The battery modules solely may be mechanically connected via the frame with the transportation vehicle.

In general, a flange may be a member having a plate-like part, which protrudes from a housing. The plate-like part may have one or more holes, which are used for screwing or bolting the flange to the frame. Furthermore, the plate-like part may be mechanically connected to one or more housings of the battery modules and/or may be provided by parts of one or more housings of the battery modules.

The flange may be made of metal, such as aluminium. Also the housing may be made at least partially from metal, such as aluminium. Other parts of the housing may be made of plastics.

The flange may be seen as a support flange for the one or more battery modules it is mechanically connected to. With the flange, the structural stability of a connected battery module may be increased. Furthermore, the transfer of mechanical stress from the frame to the battery module may be decreased.

Additionally, with the flanges, the versatility of the design of the battery modules and/or the battery packs may be increased. In particular, power modules with the same footprint may be integrated into different frames and/or support structures with different mounting points. Only the design of the flanges may have to be changed. It has to be noted that a large size housing of a power module may flex considerably when subjected to mechanical stress. The one or more flanges mechanically attached to the housing may serve to stabilize the housing exactly at the positions where the battery module is mounted, thereby preventing in particular that stress is transferred to the battery module.

According to an embodiment of the invention, the flanges are aligned in one plane. This may mean that all plate-like parts of the flanges are provided in one plane and/or are parallel with each other and/or are in one level. At least the parts of the flanges at which the battery modules are connected to the frame may be arranged in the plane.

With the flanges aligned in one plane, the battery modules are flexibly fixated to the frame. A transfer of mechanical stress from the frame of the battery pack to the battery modules is reduced. The frame may be designed with reduced mechanical stability and may be lighter and cheaper. Only the part of the frame, to which the battery modules are mounted, may have to be designed for high mechanical stability, whereas other parts of the frame may be designed with reduced stability and, thus, more lightweight.

Furthermore, if the power modules are designed such that its external connections (such as power connections, control connections and/or cooling connections) are at the same side, this may place all connections needed for assembly or maintenance to one layer and/or plane.

In general, the battery pack may be easily and fast to assemble, because fixation points are all in one layer. Battery modules may be easily and fast replaced. Only a part of the frame needs to be designed for high mechanical stability, whereas the rest may be designed with reduced mechanical stability. A lightweight battery storage system may be more versatile and may have lower material costs.

According to an embodiment of the invention, the battery modules are solely mechanically connected via the flanges to the frame. For example, the flanges may be rectangular plate-like members which surround the battery modules and which are mechanically connected to a rectangular frame. The frame may surround the battery modules, which however may be solely connected to the frame via the flanges.

According to an embodiment of the invention, the battery modules are hung into the frame via the flanges. This may mean that a battery module may stay in place, when connection means, such as screws or bolts, are removed from the flanges it is attached to. This may facilitate replacement of a battery module. Furthermore, vibrations and shocks may be damped, since the battery modules may swing freely in the frame. It may be that the battery modules hang vertically in the battery pack and/or that the battery modules are mechanically connected at a top side to the flanges. A top side may be the side of the battery modules, where electrical connections are present.

According to an embodiment of the invention, the housings of the battery modules are prismatic. A prismatic housing may have six parallel sides. A flange and/or its plate-like part may protrude orthogonal from at least one of these sides.

According to an embodiment of the invention, each flange has at least one plate, which protrudes orthogonal from a side of a housing of the battery modules. The plate or plate-like part may be attached to a further member of the housing and/or may be part of a member of the housing, which is aligned parallel to a side of the housing. The member of the housing providing the plate may be a part of the housing.

The flange and in particular the plate may have mounting holes, which may be used for connecting the flange to the frame.

According to an embodiment of the invention, the plate is arranged parallel to a side of the housing. For example, the plate may run in parallel with a bottom and a top side of the housing.

According to an embodiment of the invention, the plate protrudes in the plane of a side of the housing from the housing. For example, a member of the housing covering one side of the housing may have protrusions that extend over a side of the housing orthogonal to the side covered by the member. For example, the covered side may be a top side and the battery module may be mechanically connected via its top with the frame.

According to an embodiment of the invention, each flange at least partially or completely surrounds a housing. For example, the flange may be L-shaped, U-shaped or O-shaped. A flange with a bend around a corner of the battery back may stabilize the mechanical connection of the battery pack.

According to the invention, each flange comprises a ring-shaped plate, which surrounds one or more housings. The ring-shaped plate may have rectangular borders.

According to an embodiment of the invention, the flanges are provided by parts of the housings. For example, a member of the housing may bent away from a side of the housing it is covering.

According to an embodiment of the invention, a flange is an extension of a side wall of a housing extending in the plane of the side wall. As already mentioned, the top side or the bottom side of the housing may be covered with a member, which has parts, i.e. flanges, which protrudes over the border of the housing.

According to an embodiment of the invention, each housing provides a flange. It may be that every housing of a battery module has one or more flanges of its own.

According to an embodiment of the invention, at least two housings have a common flange. It also may be that two or more housings are mechanically connected to one flange.

According to an embodiment of the invention, the frame has at least two parallel aligned struts to which the flanges are mechanically connected. It may be that the frame is rectangular and/or that the struts are arranged in a rectangle. It also may be that the battery pack has a rack, which provides the struts.

With the frame as an appropriate support structure, the flexing of the battery packs may be inhibited locally at the mounting points of the battery modules. This may allow the overall housing of the battery module to flex, thereby reducing the required mechanical stability. At the same time, the transfer of force to the battery modules may be minimized.

For example, only the part of the frame at which the flanges are mounted may be designed for high structural stability. Other parts of the frame, such as a bottom, a cover, and/or the sides may be designed with reduced structural stability.

A further aspect of the invention relates to a transportation vehicle, such as an electric car, an electric bus, an electric tram and/or an electric railway vehicle. The transportation vehicle may comprise a battery storage system with one or more battery packs as described above and below. The battery storage system may be integrated in the transportation vehicle.

According to an embodiment of the invention, the transportation vehicle comprises an electrical drive, such as one or more electrical motors together with one or more electrical converters. The battery storage system may be adapted for supplying the electrical drive. In particular, the one or more converters may be suppliable by the battery storage system. For example, the transportation vehicle may be supplied by the battery storage system, when no power from an external power source, such as a catenary line, is present. Dependent on the power available, the battery storage system may be charged during operation of the electrical drive.

The one or more battery packs may be mounted to different parts of the transportation vehicle.

According to an embodiment of the invention, the battery pack is mounted, such that the plane, in which the flanges are aligned, is horizontal. Thus, the battery modules may flex freely within the frame. The battery modules may hang in the support structure.

According to an embodiment of the invention, the battery pack is mounted, such that the plane, in which the flanges are aligned, is vertical. This may save space and/or may facilitate maintenance. The battery modules may be mounted in a rack with vertical struts.

According to an embodiment of the invention, at least one battery pack is mounted to a roof of the transportation vehicle. Solely the frame of the battery back may be mounted to the roof and the battery modules may flex freely within the frame.

According to an embodiment of the invention, at least one battery pack is mounted inside an engine room of the transportation vehicle. Here, the plane of the flanges of the battery modules may be aligned vertically or horizontally.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a transportation vehicle according to an embodiment of the invention.
Fig. 2 schematically shows a cross-sectional view of a battery module for a battery pack according to an embodiment of the invention.
Fig. 3 schematically shows a perspective view of a battery pack according to an embodiment of the invention.
Fig. 4 schematically shows a perspective view of a battery module for a battery pack according to an embodiment of the invention.
Fig. 5 schematically shows a perspective view of two battery modules with a common flange for a battery pack according to an embodiment of the invention.
Fig. 6 schematically shows a perspective view of a battery pack according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

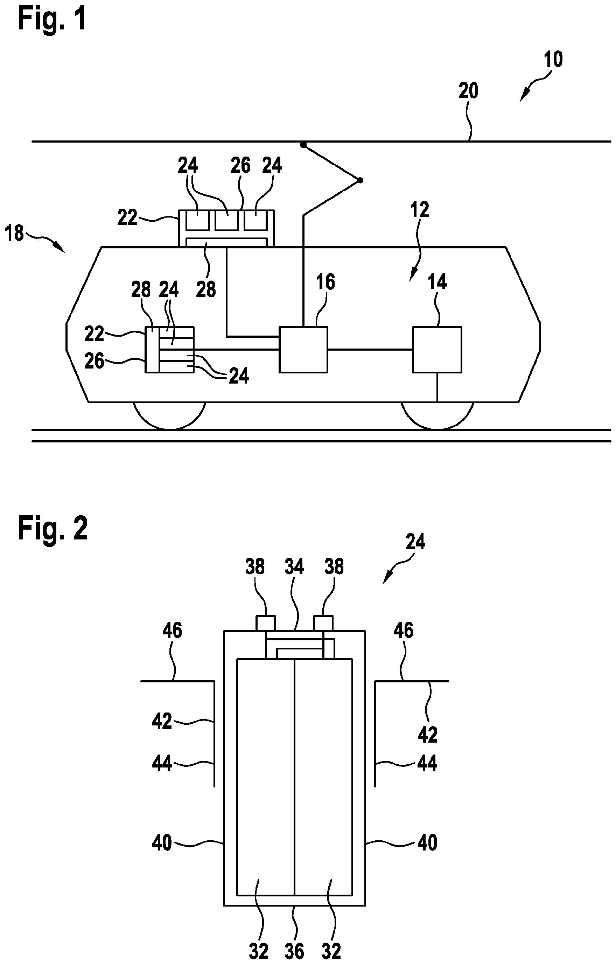

Fig. 1 shows a transportation vehicle 10 in the form of a railway vehicle. The railway vehicle, such as a train or tram, comprises a drive 12 with an electrical motor 14, which drives a wheel of the transportation vehicle 10. The drive 12 furthermore comprises an electrical converter 16, which is adapted for generating an AC current supplied to the electrical motor 14. The converter 16 may be powered from a battery storage system 18 and/or an external voltage source 20, such as a catenary line of an AC or DC grid.

It may be that the battery storage system 18 is charged from the external voltage source 20 and is then used, when no external voltage source 20 is viable, which may be the case at specific sections of the railways. It also may be that the battery storage system 18 is charged during operation of the drive 12 and the electrical motor 14 and/or that the battery storage system 18 supports the external voltage source 20, dependent on the availability of power from the external voltage source 20.

The battery storage system 18 comprises one or more battery packs 22, which comprise battery modules 24 that are mechanically connected to a frame 26. Optionally, each battery pack 22 may comprise control and/or measurement components 28, which also may be mounted to the frame 26.

The frame 26 of a battery pack 22 may be roof-mounted or may be mounted to an interior of the transportation vehicle 10, for example in an engine room.

Fig. 2 shows a battery module 24 in more detail. The battery module 24 comprises a prismatic housing 30, in which battery cells 32 are accommodated. The housing 30 has a top side 34 and a bottom side 36. At the top side 34, electrical contacts 38 for electrically connecting the battery cells 32 are provided. The housing 30 may be made of plastics and/or metal parts.

The top side 34 and the bottom side 36 are interconnected via circumferential sides 40 at which flanges 42 are provided. Each flange 42, which may be made of metal, may be connected with a first part 44 to the housing 30 and in particular to one or more sides 40. For example, the housing 30 and the first part 44 may be screwed, bolted or glued together. Furthermore, each flange 42 has a second plate-like part or plate 46, which protrudes orthogonally from the side 40. This plate 46 is used for mechanically connecting the flange 42 to a frame 26 as support structure.

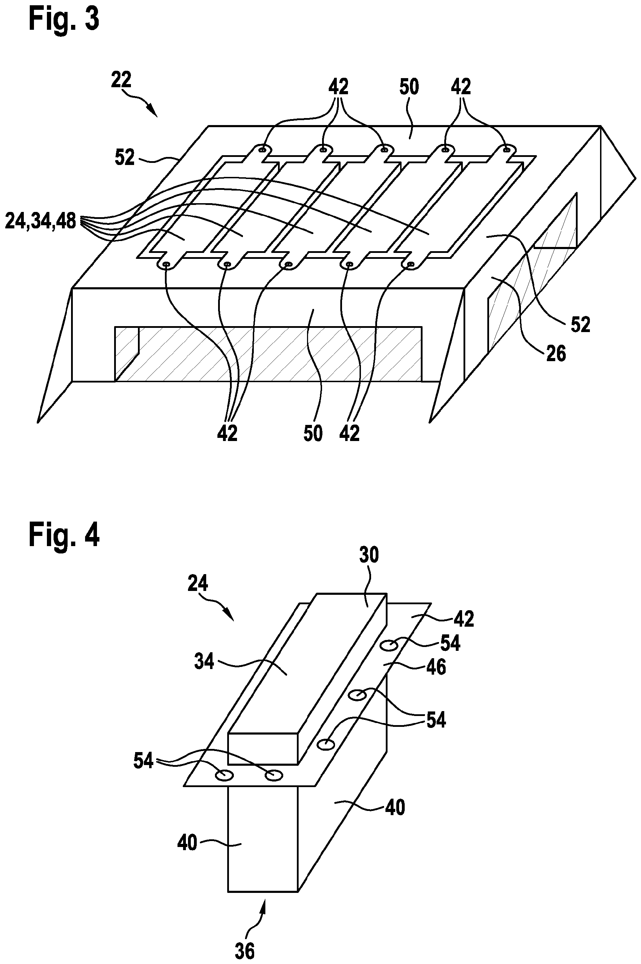

Fig. 3 shows a battery pack 22 with a plurality of battery modules 24, which are mechanically connected via flanges 42 in one plane to a frame 26.

Each battery module 24 may comprise a top side wall or top plate 48, which provides the top side 34 of the housing 30. Every top plate 48 has two flanges 42, which protrude at opposite sides over the housing 30.

The battery modules 24 are solely connected via the flanges 42 with the frame 26 and in particular to two parallel struts 50 of the frame 26. As shown, the frame 26 may be rectangular and the battery modules may be hung on their top side 34 into the frame 26.

The battery modules 24 may be arranged in a row between the struts 50. No further members may be arranged between the battery modules 24.

Only the struts 50 and orthogonal struts 52 may be designed with high structural stability. In particular, the parts of the frame 26 drawn in solid lines may have to be designed with high structural stability. All other parts, such as a floor, sides, and/or cover may be designed with reduced structural stability.

The frame shown in Fig. 3 may be mounted on the roof of a transportation vehicle 10 as shown in Fig. 1.

Fig. 4 shows a further embodiment of a power module, which has a ring-shaped flange 42 that surrounds the housing 30. The flange 42 and/or its plate 46 need not be aligned in the same plane as the top side 34 or the bottom side 36, but may be aligned in between.

As shown in Fig. 4, holes 54 may be provided in the plate 46 of the flange 42. Some or all of the holes 54 may be used for connecting the flange 42 to a frame 26, for example with screws or bolts.

For example, the battery module 24 of Fig. 4 may be connected to the frame 26 of Fig. 3, but only the holes 54 at the smaller sides 40 may be used for connection.

As shown in Fig. 4, each single battery module 24 may have one flange 42.

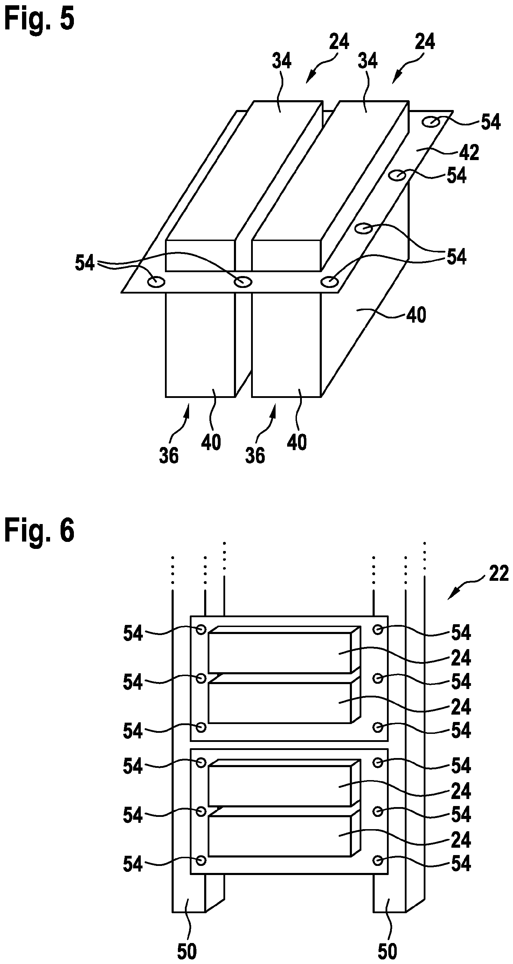

With respect to Fig. 5, it is also possible to combine several battery modules 24 in one flange 42. Fig. 5 shows two (in general at least two) battery modules 24, which may be attached with each other via two circumferential sides 40. The battery modules 24 are surrounded by a ring-shaped flange 42, which may be designed, like the one shown in Fig. 4.

Also, the arrangement of the battery modules 24 and the flange 42 of Fig. 5 may be connected to the frame 26 of Fig. 3. Again, only the holes 54 at two opposite sides 40 may be used for connection.

The above embodiments may not only be used for roof-mounted battery packs 22, where the battery modules 24 are hanging in the pack.

Fig. 6 shows a battery pack 22 with rack-mounted battery modules 24, which may be mounted inside the transportation vehicle 10. As in Fig. 4, two battery modules 24 are mechanically connected to one flange 42. The assemblies of two battery modules 24 and one flange 42 are mechanically connected via the flanges 42 to a frame 26, which comprises two vertical struts 50.

Again, the battery modules 24 are again solely attached to the frame 26 in a single vertical layer and/or vertical plane. Two vertical columns or struts 50 may be sufficient for the mounting of the battery modules 24. Furthermore, the flanges 42 may reduce the stress on the battery modules 24, when the two support columns or struts 50 flex with respect to each other.

It has to be noted that also battery modules 24 as shown in Fig. 2, 3 and 4 may be mounted vertically, such as shown in Fig. 6.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: transportation vehicle
- 12: drive
- 14: electrical motor
- 16: electrical converter
- 18: battery storage system
- 20: voltage source
- 22: battery pack
- 24: battery module
- 26: frame
- 28: control and/or measurement component
- 30: housing
- 32: battery cell
- 34: top side
- 36: bottom side
- 38: electrical contact
- 40: circumferential side
- 42: flange
- 44: first part
- 46: plate-like part, plate
- 48: top plate
- 50: strut
- 52: orthogonal strut
- 54: mounting hole

## Claims

1. A battery pack (22) for a transportation vehicle (10), the battery pack (22) comprising:
a plurality of battery modules (24), each battery module (24) having a housing (30), in which at least one battery cell (32) is accommodated;
a frame (26) for mechanically supporting the battery modules (24);
wherein the housings (30) of the battery modules (24) comprise flanges (42), which are connected to the frame (26);
wherein the flanges (42) are aligned in one plane;
wherein each flange (42) comprises a ring-shaped plate (46), which surrounds one or more housings (30).

2. The battery pack (22) of claim 1,
wherein the battery modules (24) are solely mechanically connected via the flanges (42) to the frame (26).

3. The battery pack (22) of claim 1 or 2,
wherein the battery modules (24) are hung into the frame (26) via the flanges (42).

4. The battery pack (22) of one of the previous claims,
wherein the housings (30) of the battery modules (24) are prismatic.

5. The battery pack (22) of claim 4,
wherein each flange (42) has at least one plate (46), which protrudes orthogonal from a side (40) of a housing (30) of the battery modules (24); and/or
wherein the plate (46) is arranged parallel to a side (34, 36) of the housing (30).

6. The battery pack (22) of claim 5,
wherein the plate (46) protrudes in the plane of a side (34) of the housing (30) from the housing (30).

7. The battery pack (22) of one of the previous claims,
wherein each flange (42) at least partially or completely surrounds a housing (30).

8. The battery pack (22) of one of the previous claims,
wherein the flanges (42) are provided by parts of the housings (30); and/or
wherein a flange (42) is an extension of a side wall (48) of a housing (30) extending in the plane of the side wall (48).

9. The battery pack (22) of one of the previous claims,
wherein each housing (30) provides a flange (42).

10. The battery pack (22) of one of claims 1 to 8,
wherein at least two housings (30) have a common flange (42).

11. The battery pack (22) of one of the previous claims,
wherein the frame (26) has at least two parallel aligned struts (50) to which the flanges (42) are mechanically connected.

12. A transportation vehicle (10), comprising:
an electrical drive (12);
a battery storage system (18) with at least one battery pack (22) according to one of the previous claims;
wherein the battery storage system (18) is adapted for supplying the electrical drive (12).

13. The transportation vehicle of claim 12,
wherein at least one battery pack is mounted to a roof of the transportation vehicle.

14. The transportation vehicle of claim 12 or 13,
wherein at least one battery pack is mounted inside an engine room of the transportation vehicle.

15. The transportation vehicle of one of claims 12 to 14,
wherein the battery pack is mounted, such that the plane, in which the flanges are aligned, is horizontal; or
wherein the battery pack is mounted, such that the plane, in which the flanges are aligned, is vertical.

## Patentansprüche

1. Batteriesatz (22) für ein Transportfahrzeug (10), wobei der Batteriesatz (22) umfasst:
eine Vielzahl von Batteriemodulen (24), wobei jedes Batteriemodul (24) ein Gehäuse (30) aufweist, in dem mindestens eine Batteriezelle (32) untergebracht ist;
einen Rahmen (26) zur mechanischen Abstützung der Batteriemodule (24);
wobei die Gehäuse (30) der Batteriemodule (24) Flansche (42) aufweisen, die mit dem Rahmen (26) verbunden sind;
wobei die Flansche (42) in einer Ebene ausgerichtet sind; wobei jeder Flansch (42) eine ringförmige Platte (46) umfasst, die ein oder mehrere Gehäuse (30) umgibt.

2. Batteriesatz (22) nach Anspruch 1,
wobei die Batteriemodule (24) ausschließlich mechanisch über die Flansche (42) mit dem Rahmen (26) verbunden sind.

3. Batteriesatz (22) nach Anspruch 1 oder 2,
wobei die Batteriemodule (24) über die Flansche (42) in den Rahmen (26) eingehängt werden.

4. Batteriesatz (22) nach einem der vorhergehenden Ansprüche,
wobei die Gehäuse (30) der Batteriemodule (24) prismatisch sind.

5. Batteriesatz (22) nach Anspruch 4,
wobei jeder Flansch (42) mindestens eine Platte (46) aufweist, die orthogonal aus einer Seite (40) eines Gehäuses (30) der Batteriemodule (24) herausragt; und/oder
wobei die Platte (46) parallel zu einer Seite (34, 36) des Gehäuses (30) angeordnet ist.

6. Batteriesatz (22) nach Anspruch 5,
wobei die Platte (46) in der Ebene einer Seite (34) des Gehäuses (30) aus dem Gehäuse (30) herausragt.

7. Batteriesatz (22) nach einem der vorhergehenden Ansprüche,
wobei jeder Flansch (42) zumindest teilweise oder vollständig ein Gehäuse (30) umgibt.

8. Batteriesatz (22) nach einem der vorhergehenden Ansprüche,
wobei die Flansche (42) von Teilen der Gehäuse (30) bereitgestellt werden; und/oder
wobei ein Flansch (42) eine Verlängerung einer Seitenwand (48) eines Gehäuses (30) ist, die sich in der Ebene der Seitenwand (48) erstreckt.

9. Batteriesatz (22) nach einem der vorhergehenden Ansprüche,
wobei jedes Gehäuse (30) einen Flansch (42) bereitstellt.

10. Batteriesatz (22) nach einem der Ansprüche 1 bis 8, wobei mindestens zwei Gehäuse (30) einen gemeinsamen Flansch (42) haben.

11. Batteriesatz (22) nach einem der vorhergehenden Ansprüche,
wobei der Rahmen (26) mindestens zwei parallel ausgerichtete Streben (50) aufweist, mit denen die Flansche (42) mechanisch verbunden sind.

12. Transportfahrzeug (10), umfassend:
einen elektrischen Antrieb (12);
ein Batteriespeichersystem (18) mit mindestens einem Batteriesatz (22) nach einem der vorhergehenden Ansprüche;
wobei das Batteriespeichersystem (18) zum Versorgen des elektrischen Antriebs (12) eingerichtet ist.

13. Transportfahrzeug nach Anspruch 12,
wobei mindestens ein Batteriesatz an einem Dach des Transportfahrzeugs montiert ist.

14. Transportfahrzeug nach Anspruch 12 oder 13,
wobei mindestens ein Batteriesatz in einem Maschinenraum des Transportfahrzeugs montiert ist.

15. Transportfahrzeug nach einem der Ansprüche 12 bis 14,
wobei der Batteriesatz so montiert ist, dass die Ebene, in der die Flansche ausgerichtet sind, horizontal ist; oder
wobei der Batteriesatz so montiert ist, dass die Ebene, in der die Flansche ausgerichtet sind, vertikal ist.

## Revendications

1. Bloc batterie (22) pour un véhicule de transport (10), le bloc batterie (22) comprenant :
une pluralité de modules de batteries (24), chaque module de batterie (24) ayant un boîtier (30), dans lequel au moins une cellule de batterie (32) est logée ;
un châssis (26) pour supporter mécaniquement les modules de batteries (24) ;
dans lequel les boîtiers (30) des modules de batteries (24) comprennent des brides (42), qui sont reliées au châssis (26) ;
dans lequel les brides (42) sont alignées dans un plan ;
dans lequel chaque bride (42) comprend une plaque de forme annulaire (46), qui entoure un ou plusieurs boîtiers (30).

2. Bloc batterie (22) selon la revendication 1,
dans lequel les modules de batteries (24) sont reliés uniquement mécaniquement par l'intermédiaire des brides (42) au châssis (26).

3. Bloc batterie (22) selon la revendication 1 ou 2,
dans lequel les modules de batteries (24) sont suspendus dans le châssis (26) par l'intermédiaire des brides (42).

4. Bloc batterie (22) selon l'une des revendications précédentes,
dans lequel les boîtiers (30) des modules de batteries (24) sont prismatiques.

5. Bloc batterie (22) selon la revendication 4,
dans lequel chaque bride (42) a au moins une plaque (46), qui fait saillie de manière orthogonale à partir d'un côté (40) d'un boîtier (30) des modules de batteries (24) ; et/ou
dans lequel la plaque (46) est agencée de manière parallèle à un côté (34, 36) du boîtier (30).

6. Bloc batterie (22) selon la revendication 5,
dans lequel la plaque (46) fait saillie dans le plan d'un côté (34) du boîtier (30) à partir du boîtier (30).

7. Bloc batterie (22) selon l'une des revendications précédentes,
dans lequel chaque bride (42) entoure au moins partiellement ou complètement un boîtier (30).

8. Bloc batterie (22) selon l'une des revendications précédentes,
dans lequel les brides (42) sont fournies par des parties des boîtiers (30) ; et/ou
dans lequel une bride (42) est une extension d'une paroi latérale (48) d'un boîtier (30) s'étendant dans le plan de la paroi latérale (48).

9. Bloc batterie (22) selon l'une des revendications précédentes,
dans lequel chaque boîtier (30) fournit une bride (42).

10. Bloc batterie (22) selon l'une des revendications 1 à 8,
dans lequel au moins deux boîtiers (30) ont une bride commune (42).

11. Bloc batterie (22) selon l'une des revendications précédentes,
dans lequel le châssis (26) a au moins deux renforts alignés parallèles (50) auxquels les brides (42) sont reliées mécaniquement.

12. Véhicule de transport (10), comprenant :
un entraînement électrique (12) ;
un système de stockage de batterie (18) avec au moins un bloc batterie (22) selon l'une des revendications précédentes ;
dans lequel le système de stockage de batterie (18) est adapté pour alimenter l'entraînement électrique (12).

13. Véhicule de transport selon la revendication 12,
dans lequel au moins un bloc batterie est monté sur un toit du véhicule de transport.

14. Véhicule de transport selon la revendication 12 ou 13,
dans lequel au moins un bloc batterie est monté à l'intérieur d'un compartiment moteur du véhicule de transport.

15. Véhicule de transport selon l'une des revendications 12 à 14,
dans lequel le bloc batterie est monté, de telle sorte que le plan, dans lequel les brides sont alignées, est horizontal ; ou
dans lequel le bloc batterie est monté, de telle sorte que le plan, dans lequel les brides sont alignées, est vertical.
